# EUROPÄISCHE PATENTANMELDUNG

(11) **EP 4 717 131 A1**
(43) Veröffentlichungstag der Anmeldung: **01.04.2026**
(21) Anmeldenummer: 24203573.1
(22) Anmeldetag: 30.09.2024
(51) Int. Cl.: A47J 31/06, A47J 31/36, A47J 31/40, B65D 65/46, B65D 85/804

(54) **VERFAHREN ZUR ZUBEREITUNG EINES GETRÄNKS AUS EINER KAPSEL, VERWENDUNG EINER GETRÄNKEZUBEREITUNGSMASCHINE UND EINER KAPSEL SOWIE SYSTEM ZUR ZUBEREITUNG EINES GETRÄNKS**

(71) Anmelder: Delica AG, 5033 Buchs AG (CH)
(72) Erfinder: NICKEL, Axel, 30966 Hemmingen (DE); SIEFARTH, Caroline, 4102 Binningen (CH); WÜTHRICH, Martin, 4417 Ziefen (CH); THILLA, Tim, 79576 Weil am Rhein (DE); AFFOLTER, Roland, 5103 Möriken (CH)
(74) Vertreter: Hepp Wenger Ryffel AG

(57) **Zusammenfassung**

Verfahren zur Zubereitung eines Getränks aus einer Kapsel (1), wobei die Kapsel (1) eine Getränkesubstanz (3) und eine die Getränkesubstanz (3) umschliessende Hülle (2) aufweist, umfassend die Schritte:
- Einbringen der Kapsel (1) in eine Brühkammer (12) einer Getränkezubereitungsmaschine,
- Aufbrechen der Hülle (2) der Kapsel (1),
- Durchströmen der Brühkammer (12) mit einem Extraktionsfluid.

## Beschreibung

Die vorliegende Erfindung betrifft ein Verfahren zur Zubereitung eines Getränks aus einer Kapsel, die Verwendung einer Getränkezubereitungsmaschine, die Verwendung einer Kapsel sowie ein System zur Zubereitung eines Getränks gemäss den Oberbegriffen der unabhängigen Ansprüche.

Aus dem Stand der Technik sind verschiedene Verfahren zur Zubereitung eines Getränks, insbesondere von Kaffee bekannt. Ebenso sind bereits vielfach unterschiedliche Maschinen, Kapseln und Systeme zur Zubereitung eines Getränks bekannt.

Bei klassischen Kolben- oder Siebträgersystemen wird ein in einem Kolben angeordnetes Filtersieb mit einer bestimmten Menge einer extrahierbaren Getränkesubstanz, meist Kaffeepulver, bestückt und in eine entsprechende Aufnahme einer Getränkezubereitungsmaschine eingesetzt. Unter zum Teil hohem Druck wird ein Extraktionsfluid, meist erhitztes Wasser, durch die Getränkesubstanz gepresst, so dass die gewünschten Geschmacksstoffe aus der Getränkesubstanz extrahiert werden und durch das Filtersieb austreten. Nachteilig sind die aufwändige Bereitstellung und Handhabung der Getränkesubstanz vor der Extraktion. Speziell bei der Zubereitung eines qualitativ hochwertigen Kaffeegetränks ist die Frische des Kaffeepulvers ausschlaggebend. Eine längere Verweildauer in Umgebungsluft ist sowohl für die gerösteten Kaffeebohnen als auch für das Kaffeepulver zu vermeiden. Ausserdem müssen nach erfolgter Getränkezubereitung die Rückstände der verbrauchten Getränkesubstanz entsorgt und das System gereinigt werden.

Bekannt sind auch vollautomatische Getränkezubereitungssysteme, insbesondere für die Kaffeezubereitung, welche über ein integriertes Mahlwerk mit automatischer Dosierung und eine entsprechende Brühkammer verfügen. Hier wird zumindest das Kaffeepulver erst unmittelbar vor der Getränkezubereitung bereitgestellt, so dass der Kontakt mit Sauerstoff der Umgebungsluft minimiert wird. Die verwendeten Kaffeebohnen werden jedoch in der Maschine gelagert, so dass diese der Umgebungsluft ausgesetzt sind. Die Reinigung solcher Maschinen ist aufwändig.

Entsprechend haben sich verschiedene Kapselsysteme entwickelt, welche die Getränkesubstanz in einer hermetisch geschlossenen Kapsel bereitstellen. Dabei ist die Getränkesubstanz pulverförmig oder als Pressling in der Kapsel eingeschlossen. Zur Getränkezubereitung wird die Kapsel beidseits geöffnet und ein Extraktionsfluid kann die in der Kapsel eingeschlossene Getränkesubstanz durchströmen. Nachteilig ist die grosse Menge an Abfall, da die Kapseln nur für den einmaligen Gebrauch vorgesehen sind. Zwar sind zwischenzeitlich auch biologisch abbaubare Kapseln erhältlich, viele sind jedoch nur bedingt heimkompostierbar. Ausserdem wird bedingt durch die benötigte präzise Anpassung der Kapsel an die Brühkammern der Benutzer oft an einen bestimmten Hersteller gebunden. Ebenso wird die Menge der Getränkesubstanz starr durch die Kapsel vorgegeben. Eine abweichende Dosierung zur Herstellung einer stärkeren oder schwächeren Extraktion ist nicht möglich. Ebenso werden durch die Herstellung der Kapsel wertvolle Ressourcen verbraucht.

Die WO 2022/136284 A1 beschreibt ein alternatives Kapselkonzept basierend auf einem Getränkesubstanz-Pressling, welcher von einer Hülle umschlossen ist. Bevor die Hülle geöffnet wird, muss die Kapsel in einer Brühkammer eingeschlossen und die Hülle konditioniert werden, sodass sie elastisch wird und sich die Kapsel durch Einführen von Wasser an den Innenraum der Brühkammer anpassen kann. Entsprechend kann dann wiederum das Extraktionsfluid durch die Kapsel durchgeleitet werden, ohne dass die Hülle aufbricht und die Brühkammer durch die Getränkesubstanz verschmutzt wird. Der Verbraucher ist aber an den Hersteller gebunden und die Menge der Getränkesubstanz ist vorgegeben. Die Herstellung der Hülle ist aufwändig, da diese konditionierbar sein muss und auf das entsprechende Verfahren der Maschine abgestimmt sein muss.

WO 2022/018242 A1 offenbart eine Maschine zur Aufnahme einer unverpackten Getränkesubstanz, wobei die Getränkesubstanz in der Maschine kompaktiert oder aufgebrochen werden kann. Nachteilig ist, dass die Getränkesubstanz nicht durch eine Hülle geschützt in die Maschine eingegeben werden kann, sondern vorgängig ausgepackt werden muss.

Es ist Aufgabe der Erfindung, die Nachteile des Standes der Technik zu überwinden. Insbesondere soll die Zubereitung eines Getränks flexibler, vereinfacht und kostengünstiger ermöglicht werden.

Diese Aufgabe wird durch das in den unabhängigen Patentansprüchen definierte Verfahren, die Verwendung und das System gelöst. Weitere Ausführungsformen ergeben sich aus den abhängigen Patentansprüchen.

Ein erfindungsgemässes Verfahren zur Zubereitung eines Getränks aus einer Kapsel, wobei die Kapsel eine Getränkesubstanz und eine die Getränkesubstanz umschliessende Hülle aufweist, umfasst die folgenden Schritte:
- Einbringen der Kapsel in eine Brühkammer einer Getränkezubereitungsmaschine,
- Aufbrechen der Hülle der Kapsel zum Erzeugen eines oder mehrerer Fluidzugänge,
- Durchströmen der Brühkammer mit einem Extraktionsfluid.

Das Aufbrechen der Hülle erfolgt vorzugsweise in der Brühkammer, insbesondere in der geschlossenen Brühkammer, kann aber auch in der offenen Brühkammer erfolgen, beispielsweise im Falle einer Siebträgermaschine im Siebträger mittels eines Tampers. Die Reihenfolge der Verfahrensschritte kann unterschiedlich sein. Das Aufbrechen der Hülle kann abhängig von der Form der Kapsel nicht-orientiert erfolgen. Rotationssymmetrische Kapseln brauchen also nicht in einer bestimmten Ausrichtung verwendet zu werden. Vorzugsweise erfolgt das Aufbrechen der Hülle bevor die Brühkammer mit dem Extraktionsfluid durchströmt wird.

Unter einem Extraktionsfluid wird üblicherweise Wasser verstanden, welches beim Kontakt mit der Getränkesubstanz ein Getränk erzeugt. Dabei kann es sich um eine Extraktion handeln, wie beispielsweise bei Kaffee, oder die Getränkesubstanz wird gelöst, wie beispielsweise bei Instantkaffee. Das Extraktionsfluid kann kalt oder warm sein. Unter einer Extraktion der Getränkesubstanz wird entsprechend auch die Getränkezubereitung durch Auflösen der Getränkesubstanz verstanden. Vorzugsweise wird die geschlossene Brühkammer mit dem Extraktionsfluid unter Druck, insbesondere einem mittleren Druck zwischen 0.5 bar bis 16 bar, bevorzugt zwischen 1.5 bar bis 14 bar, besonders bevorzugt zwischen 3 bar bis 12 bar, durchströmt. Unter einem mittleren Druck wird der Mittelwert des Drucks ab Beginn der Extraktion bis drei Sekunden vor Ende des Pumpenbetriebs verstanden. Ein allfälliges Vorbrühen wird dabei nicht berücksichtigt. Die Druckmessung erfolgt dabei zwischen Pumpe und Brühkammer.

Hier und im Folgenden wird unter Aufbrechen der Hülle verstanden, dass die in der Hülle eingeschlossene Getränkesubstanz im Wesentlichen freigelegt wird und wenigstens ein Fluidzugang hergestellt wird. Das Aufbrechen der Hülle erfolgt durch externen Druck einer Anpressfläche eines Aufbrechmittels auf die Hülle der Kapsel. Dabei weist die Anpressfläche wenigstens 20%, vorzugsweise wenigstens 40%, besonders bevorzugt wenigstens 60% der Querschnittsfläche der Brühkammer und/oder wenigstens 20%, vorzugsweise wenigstens 40%, besonders bevorzugt wenigstens 60% einer Querschnittsfläche der Kapsel auf. Beispielsweise kann die Anpressfläche eine Grösse zwischen 100 mm² und 2000 mm², bevorzugt zwischen 200 mm² und 1800 mm², besonderes bevorzugt zwischen 400 mm² und 1500 mm², aufweisen. Es versteht sich von selbst, dass die Grösse der Anpressfläche abhängig von der Grösse der Kapsel auch unterschiedlich sein kann.

Unter der Anpressfläche wird diejenige Fläche des Aufbrechmittels verstanden, welche sich relativ zur Kapsel bewegt. Unabhängig davon, ob die gesamte Anpressfläche mit der Kapsel in Berührung steht oder nicht.

Vorzugsweise weist die Anpressfläche eine Kontur auf, welche sich von der Kontur der mit dem Aufbrechmittel zu beaufschlagenden Kapsel unterscheidet. Entsprechend erfolgt bei Beaufschlagung der Kapsel mit dem externen Druck des Anpressmittels eine Anpassung der Kontur der Kapsel, was zum Aufbrechen der Hülle führt.

Unter Aufbrechen wird nicht ein Aufstechen mit einem spitzen Gegenstand oder ein Aufschneiden mit einem messerähnlichen Gegenstand verstanden. Der Fluidzugang kann beim Aufbrechen im Gegensatz zum Aufstechen an einer oder mehreren nicht definierten Stellen erfolgen. Das Aufbrechmittel kann eine leichte Strukturierung aufweisen. Diese Strukturierung dient nicht dem Aufstechen der Hülle, sondern erzeugt eine Vielzahl von lokalen Deformationen, welche ein Aufbrechen der Hülle begünstigen. Das Aufbrechen erfolgt nicht an einer definierten Stelle, sondern wird sich abhängig von der Deformation und der Beschaffenheit der Kapsel an einer oder mehreren nicht definierten Stelle ausbilden. Das Aufbrechen kann ohne Durchdringen eines Gegenstandes durch die Hülle erfolgen. Beim Aufbrechen der Hülle kann sich die Hülle von der Getränkesubstanz lösen. Es ist aber auch denkbar, dass die aufgebrochene Hülle mit der Getränkesubstanz oder Teilen davon verbunden bleibt.

Durch das Aufbrechen der Hülle kann auf Durchstechelemente in der Brühkammer verzichtet werden. Entsprechend weist die Brühkammer keine Elemente auf, welche sich in Zusammenwirkung mit der Kapsel abnutzen. Die Getränkezubereitung wird dauerhaft zuverlässiger.

Die Getränkesubstanz kann ein Extraktionsgut umfassen oder daraus bestehen, beispielsweise Kaffeepulver oder Tee. Ebenso kann die Getränkesubstanz aber auch lösliche Stoffe umfassen oder daraus bestehen, beispielsweise Instantkaffee, Instantsuppe, Instanttee, Milchpulver, Kakaopulver. Auch sind Kombinationen von Extraktionsgut und löslichen Stoffen möglich.

Die aufgebrochene Hülle kann beim Durchströmen der Brühkammer in der Brühkammer verbleiben. Entsprechend muss die Hülle nicht separat entfernt werden. Denkbar ist insbesondere, dass sich die Hülle beim Durchströmen der Brühkammer im Extraktionsfluid auflöst. Beispielsweise kann die Hülle aus einem Aroma- und/oder Süssstoff bestehen, welcher beim Auflösen der Hülle das Getränk aromatisiert und/oder süsst. Unter einem Süssstoff wird dabei ein Zucker oder Zuckerersatzstoff verstanden. Ebenso ist es auch denkbar, dass die Hülle sich im Extraktionsfluid nicht auflöst und zusammen mit der nach der Extraktion verbleibenden Getränkesubstanz aus der Brühkammer entfernt wird.

Zum Aufbrechen der Hülle kann ein Volumen der Brühkammer reduziert werden und/oder ein Aufbrechmittel in die Brühkammer eindringen. Durch eine Reduktion des Volumens der Brühkammer kann die Kapsel deformiert und die Hülle aufgebrochen werden. Hierzu kann beispielsweise eine Wand oder ein Bereich einer Wand der Brühkammer verschiebbar ausgebildet sein. Weiter ist auch eine Formänderung der Brühkammer denkbar, bei der das Volumen der Brühkammer gleichbleibt, reduziert oder vergrössert wird. Insbesondere wird die Abmessung der Brühkammer in wenigstens einer Dimension reduziert. Durch eine Reduktion der Dimension der Brühkammer in einer Dimension wird die Kapsel entsprechend deformiert und kann sich entsprechend in einer anderen Richtung in der Brühkammer ausdehnen. Ebenso wird durch das Eindringen eines Aufbrechmittels in die Brühkammer die Kapsel deformiert und die Hülle aufgebrochen. Abhängig von der Grösse und/oder der Ausgestaltung des Aufbrechmittels wird das Volumen der Brühkammer damit gleichzeitig mehr oder weniger reduziert. Somit kann mit einfachen Mitteln die Kapsel geöffnet werden.

Unter einem Aufbrechmittel wird explizit kein Aufstechdorn verstanden. Beispielsweise kann das Aufbrechmittel ein Stempel sein, welcher auf die Hülle und die darin eingeschlossene Getränkesubstanz einen Druck ausübt. Die Kapsel wird somit deformiert und die Hülle bricht durch die Deformation der Kapsel auf. Die Hülle muss nicht durchstochen werden, eine Abnutzung des Aufbrechmittels wird auf ein Minimum reduziert. Das Aufbrechmittel kann als einfacher Stempel oder als unrundes rotierendes Element ausgestaltet sein. Denkbar ist, dass das Aufbrechmittel nicht nur in die Brühkammer eindringt, sondern dort auch durch eine Rotationsbewegung die Hülle aufbricht.

Das Aufbrechmittel und/oder die Brühkammer kann mit einer Beschichtung versehen sein, welche ein Anhaften der Getränkesubstanz und/oder der Hülle verhindert oder zumindest erschwert. Die verbleibende Hülle und Getränkesubstanz kann somit einfach nach der Getränkezubereitung aus der Brühkammer entfernt werden.

Zum Aufbrechen der Hülle kann eine Kompressionskraft auf die Kapsel einwirken. Diese Kompressionskraft kann dabei die Kapsel soweit deformieren, dass die Hülle aufbricht. Die Kompressionskraft wirkt wenigstens auf eine Teilfläche der Hülle der Kapsel ein. Die Kapsel kann sich, insbesondere ausserhalb der mit der Kompressionskraft beaufschlagten Teilfläche, soweit deformieren, dass die Hülle aufbricht. Im Bereich der mit der Kompressionskraft beaufschlagten Teilfläche kann die Kapsel kollabieren. Insbesondere wenn die Kapsel einen Pressling umfasst, kann sich dieser durch Beaufschlagen mit einer Kompressionskraft deformieren und kollabieren. Die Getränkesubstanz und die Form des Presslings können dadurch in ein loses Schüttgut überführt werden. Ebenso ist es denkbar, dass die Hülle durch Scherkräfte aufgebrochen wird. Ein Durchstechen der Hülle wird vermieden. Die Abnutzung des Aufbrechmittels ist minimal.

Die Kompressionskraft kann mindestens 10 N, bevorzugt mindestens 50 N, besonders bevorzugt mindestens 100 N, betragen, insbesondere bei einer kugelförmigen Kapsel mit Pressling und einem Durchmesser zwischen 20 mm bis 65 mm, vorzugsweise zwischen 20 mm bis 50 mm, besonders bevorzugt zwischen 20 mm bis 35 mm. Dabei wirkt die Kompressionskraft vorzugsweise auf eine Teilfläche der Hülle.

Beim Aufbrechen der Hülle bricht die Hülle an wenigstens einer Stelle auf, vorzugweise bricht die Hülle an einer Vielzahl von Stellen auf. Durch ein solches Aufbrechen wird gewährleistet, dass eine anschliessende Extraktion der Getränkesubstanz beim Durchströmen der Brühkammer mit dem Extraktionsfluid gleichmässig erfolgen kann. Bevorzugt breitet sich ein Bruch in der Hülle bei anhaltender oder fortschreitender Kompression weiter aus und/oder es bilden sich zusätzliche Bruchstellen. Vorzugsweise erfolgt das weitere Aufbrechen bzw. die zusätzliche Ausbildung von Bruchstellen unabhängig von der Position des ersten Bruchs.

Das Aufbrechen der Hülle kann trocken in oder ausserhalb der Brühkammer erfolgen. Es ist aber auch denkbar, dass ein Aufbrechen in der Brühkammer nach einem Benetzen der Hülle erfolgt. Wenn die Hülle benetzt ist, kann sich unmittelbar nach dem Aufbrechen auch die Getränkesubstanz benetzen. Die Qualität der nachfolgenden Extraktion der Getränkesubstanz kann somit beeinflusst werden.

Die Getränkesubstanz kann in Form eines Presslings innerhalb der Hülle vorliegen. Entsprechend wird die Handhabung der Kapsel für den Anwender vereinfacht. Vorzugsweise wird beim Aufbrechen der Hülle auch der Pressling ganz oder teilweise aufgebrochen. Vorzugsweise zerfällt der Presssling zu einem Schüttgut. Eine gleichmässige Extraktion der Getränkesubstanz wird vereinfacht.

Beim Aufbrechen des Presslings zu einem Schüttgut kann die Dichte der Getränkesubstanz reduziert werden, vorzugsweise um wenigstens 10%, besonders bevorzugt um wenigstens 15%, ganz besonders bevorzugt um wenigstens 20%, gegenüber der Dichte der Getränkesubstanz bei intaktem Pressling.

Die Hülle der Kapsel kann aromadicht und sauerstoffundurchlässig ausgebildet sein. Durch die aromadichte und sauerstoffundurchlässige Hülle kann die Kapsel über längere Zeit gelagert werden, ohne dass die Getränkesubstanz oder das daraus Getränk einen Qualitätsverlust erleidet. Unter aroma- und sauerstoffdicht wird allgemein eine oberflächenbereinigte Oxygen Transmission Rate (OTR) in der Einheit cm³ pro m² pro Tag pro 0.21 bar von weniger als 50, vorzugsweise weniger als 20, vorzugsweise weniger als 10, besonders bevorzugt weniger als 5, verstanden. Die OTR gibt an, welche Menge an Sauerstoff pro Flächen- und Zeiteinheit durch die Hülle diffundiert. Mit solchen OTR-Werten kann gewährleistet werden, dass die Frische der Kapseln nach dem Öffnen einer Verpackung für wenigstens drei Monate gewährleistet werden kann. Der Konsument kann somit die Kapseln über eine gewisse Zeit ohne Qualitätsverlust mit geöffneter Verpackung lagern. Die Hülle kann, wie in WO 2020/224952 A1 offenbart, ausgestaltet sein.

Die Kapsel kann biologisch abbaubar und/oder heimkompostierbar sein. Die Kapsel kann nach der Getränkezubereitung somit kompostiert und in den natürlichen Ressourcenkreislauf wieder eingefügt werden. Es entsteht kein Abfall, welcher aufwändig rezykliert werden oder gar verbrannt werden muss.

Unter "heimkompostierbar" wird dabei verstanden, dass das Material gemäss dem Zertifizierungsprogrammen NF T 51-800:2015-11-14 (Plastics Specifications for plastics suitable for home composting) und AS 5810:2010 (Biodegradable plastics - Biodegradable plastics suitable for home composting) zumindest heimkompostierbar ist. Dies bedeutet eine Zersetzung (biodegradation) von mindestens 90% des Materials unter Freisetzung von CO₂ innerhalb von 12 Monaten bei einer Temperatur von 25±5 °C sowie eine Fragmentierung (Desintegration) von mindestens 90 % des Materials innerhalb von 6 Monaten bei einer Temperatur von 25±5 °C. Die Kapsel kann, wie in WO 2020/224952 A1 beschrieben, ausgebildet sein.

Die Hülle der Kapsel kann eine Dicke zwischen 0.01 mm und 3.5 mm, insbesondere zwischen 0.02 mm und 1.5 mm, bevorzugt zwischen 0.05 mm und 0.5 mm, aufweisen. Je nach gewähltem Material der Hülle kann auch die Dicke angepasst werden, so dass dies bei Beaufschlagung der Kapsel mit einer Kompressionskraft zuverlässig aufbricht.

Ein weiterer Aspekt der vorliegenden Erfindung ist eine Verwendung einer Getränkezubereitungsmaschine zur Zubereitung eines Getränks aus einer Kapsel. Dabei weist die Getränkezubereitungsmaschine eine Brühkammer zur Aufnahme und Extraktion der Kapsel und ein Mittel zum Aufbringen einer Kompressionskraft auf die Kapsel auf. Die Kapsel weist eine Getränkesubstanz und eine die Getränkesubstanz umschliessende Hülle auf. Die Hülle ist derart ausgebildet, dass diese bei Beaufschlagung mit der Kompressionskraft aufbricht. Vorzugsweise wird bei der Verwendung der Getränkezubereitungsmaschine das Verfahren wie vorgängig beschrieben durchgeführt.

Durch die Verwendung einer Getränkezubereitungsmaschine, welche eine Kompressionskraft auf eine in der Maschine aufgenommene Kapsel ausüben kann, so dass diese aufbricht, wird eine besonders einfache Getränkezubereitung ermöglicht.

Die Hülle der Kapsel kann derart ausgestaltet sein, dass diese bei Beaufschlagung mit der Kompressionskraft an einer nicht definierten Stelle aufbricht. Entsprechend kann die Kapsel ohne eine bestimmte Ausrichtung bezüglich der einwirkenden Kompressionskraft in die Brühkammer eingeführt werden. Dies ist insbesondere dann vorteilhaft, wenn die Kapsel rotationssymmetrisch, insbesondere kugelförmig ausgestaltet ist und keine Orientierung vorgegeben wird.

Ein weiterer Aspekt der vorliegenden Erfindung ist eine Verwendung einer Kapsel zur Zubereitung eines Getränks in einer Getränkezubereitungsmaschine, vorzugsweise in einem Verfahren wie vorgängig beschrieben, wobei die Getränkezubereitungsmaschine eine Brühkammer zur Aufnahme und Extraktion der Kapsel umfasst. Dabei weist die Kapsel eine Getränkesubstanz und eine die Getränkesubstanz umschliessende Hülle auf. Die Hülle ist derart ausgebildet, dass diese bei Beaufschlagung mit einer Kompressionskraft, vorzugsweise durch die Getränkezubereitungsmaschine, aufbricht.

Durch die Verwendung einer Kapsel mit einer Hülle, welche unter einer Kompressionskraft aufbricht, wird eine besonders einfache Getränkezubereitung ermöglicht. So kann beispielsweise eine Kapsel mit Hülle in einen Kolben einer Siebträgermaschine eingesetzt werden. Somit wird immer dieselbe Menge an Getränkesubstanz eingesetzt. Mittels des bei Siebträgermaschinen bekannten Tampers kann eine Kompressionskraft auf die Kapsel einwirken, welche die Hülle der Kapsel aufbricht. Es kann in gewohnter Weise ein Getränk extrahiert werden. Die aufgebrochene Hülle behindert den Durchfluss des Extraktionsfluids nicht.

Die Kapsel kann in der Vorrichtung mit einer Kompressionskraft beaufschlagbar sein. Entsprechend wird die Hülle der Kapsel erst in der Vorrichtung aufgebrochen. Eine ungewollte Beeinflussung oder Kontamination der Getränkesubstanz durch den Benutzer kann ausgeschlossen werden. Beispielsweise kann die Kapsel in einer einem Vollautomat ähnlichen Maschine verwendet werden. Entsprechend muss kein Mahlwerk in der Maschine bereitgestellt werden.

Die Hülle der Kapsel kann derart ausgestaltet sein, dass diese bei Beaufschlagung mit der Kompressionskraft an einer nicht definierten Stelle aufbricht. Entsprechend kann die Kapsel ohne eine bestimmte Ausrichtung bezüglich der einwirkenden Kompressionskraft in die Brühkammer eingeführt werden. Dies ist insbesondere dann vorteilhaft, wenn die Kapsel rotationssymmetrisch, insbesondere kugelförmig ausgestaltet ist und keine Orientierung vorgegeben wird.

Die Hülle kann, wie vorgängig beschrieben, aromadicht und sauerstoffundurchlässig ausgebildet sein. Entsprechend wird die Getränkesubstanz erst unmittelbar bei der Benutzung der Kapsel mit Sauerstoff aus der Umgebungsluft in Verbindung gebracht. Eine hervorragende Frische der Getränkesubstanz ist gewährleistet.

Die Getränkesubstanz kann in Form eines Presslings vorliegen. Die Handhabung der Kapsel für den Benutzer wird dadurch erheblich vereinfacht. Ausserdem hinterlässt eine «starre» Kapsel einen wertigeren Eindruck als eine mit einer losen Getränkesubtanz befüllte Hülle. Auch ist die Dosierung der Getränkesubstanz einfach von einer Portion auf zwei oder mehrere Portionen anpassbar, indem gleichzeitig zwei oder mehrere Kapseln in der Getränkezubereitungsmaschine aufgenommen werden.

Die Kapsel kann eine runde, insbesondere kugelrunde, Form aufweisen. Ebenso ist aber auch denkbar, dass die Form der Kapsel anderen geometrischen Körpern im Wesentlichen entspricht, wie beispielsweise einem Würfel, Quader, Prisma, Pyramide, Zylinder, Kegelstumpf, Kegel, Torus, Ellipsoid, usw. Dabei ist zu beachten, dass allfällige Ecken und Kanten vorzugsweise nicht scharf ausgebildet, sondern abgerundet sind.

Die Kapsel kann vor dem Einsetzen in die Brühkammer eine maximale äussere Abmessung bis 65 mm, bevorzugt bis 50 mm, besonders bevorzugt bis 40 mm aufweisen. Eine kleinste äussere Abmessung kann grösser oder gleich 15 mm, bevorzugt 20 mm, besonders bevorzugt 25 mm, sein.

Die Kapsel kann eine maximale Kraft im Bruchfestigkeitstest, wie nachfolgend beschrieben, von wenigstens 10 N, insbesondere wenigstens 50 N, bevorzugt wenigstens 100 N, aufnehmen.

Für den Bruchfestigkeitstest wird die Kapsel zwischen zwei parallelen Platten einer Zug-Druck-Prüfmaschine (beispielsweise mit einem Kraftaufnehmer Xforce P der Firma Zwick/Roell ausgestattet) positioniert. Dabei wird die Kapsel mittig auf der unteren Platte in Extraktionsrichtung (sofern eine solche vorgegeben ist), im Falle einer drehsymmetrischen Kapsel, beispielsweise mit Kugel- oder Würfelform, in Pressrichtung ausgerichtet. Die Platten weisen einen Durchmesser auf, welcher wenigstens 50 % grösser ist als die maximale äussere Abmessung der Kapsel. Die parallelen Platten werden langsam zusammengefahren und ein Kraft-Weg-Diagramm aufgezeichnet. Die Belastung wird erhöht bis zur Beschädigung der Hülle. Gleichzeitig mit diesem Anriss oder Bruch ist ein Kraftabfall festzustellen. Sobald ein Riss oder Bruch der Hülle festgestellt wird, wird der Bruchfestigkeitstest beendet. Die maximale gemessene Kraft ohne Beschädigung der Hülle wird als Bruchfestigkeit ausgegeben. Bei einer mehrschichtigen Hülle wird eine Beschädigung oder ein Durchriss der Hülle bis auf die Getränkesubstanz als Beschädigung der Hülle verstanden.

Ein weiterer Aspekt der vorliegenden Erfindung betrifft ein System zur Zubereitung eines Getränks, vorzugsweise zum Durchführen eines Verfahrens wie vorgängig beschreiben. Dabei umfasst das System eine Kapsel und eine Brühkammer, wobei die Brühkammer ein Volumen zur Aufnahme der Kapsel aufweist. Die Kapsel weist eine Getränkesubstanz und eine die Getränkesubstanz umschliessende Hülle auf. Dabei ist die Hülle derart ausgebildet, dass diese bei Beaufschlagung mit einer Kompressionskraft aufbricht. Die Brühkammer weist Mittel zum Aufbrechen der Hülle der Kapsel auf.

Ein solches System erlaubt eine einfache Zubereitung eines Getränks. Der Benutzer muss sich weder um die Portionierung der Getränkesubstanz noch um die Beschaffung einer maschinenspezifischen Kapsel kümmern.

Die Mittel zum Aufbrechen der Hülle mit einer Kompressionskraft können das Volumen der Brühkammer reduzieren und/oder in das Volumen der Brühkammer eindringen. Die Kapsel wird in beiden Fällen deformiert und deren Hülle bricht auf. Je nach Ausgestaltung des Mittels zum Aufbrechen der Hülle kann auch bei dessen Eindringen in die Brühkammer das Volumen der Brühkammer reduziert werden. Die Hülle kann somit mit einfachen Mitteln aufgebrochen werden.

Beispielsweise kann das Volumen der Brühkammer in einer Dimension derart reduziert werden, dass die Dimension der Kapsel in dieser Richtung um wenigstens 3 %, bevorzugt um wenigstens 6 %, besonders bevorzugt um wenigstens 9 %, ausgehend von der ursprünglichen Ausdehnung, reduziert wird.

Beim Eindringen des Aufbrechmittels in die Brühkammer kann das Aufbrechmittel um 3 %, bevorzugt um wenigstens 6 %, besonders bevorzugt um wenigstens 9 %, ausgehend von der ursprünglichen Ausdehnung der Kapsel in die Brühkammer eindringen.

Je nach Ausgestaltung der Kapsel kann das Volumen in einer Richtung entsprechend einer bestimmten Achse der Kapsel reduziert werden und/oder das Aufbrechmittel in einer Richtung in die Brühkammer eindringen. Entsprechend wird somit ein möglichst effizientes Aufbrechen ermöglicht. Bei einer kugelförmigen Kapsel spielt die Richtung jedoch keine Rolle.

Ebenso ist es auch denkbar, dass lediglich die Form der Brühkammer verändert wird, nicht aber dessen Volumen. So kann beispielsweise ein Aufbrechmittel einseitig in die Brühkammer einfahren, während eine Seitenwand der Brühkammer oder ein Teilbereich davon so nach aussen fährt, dass das Volumen innerhalb der Brühkammer gleich gross bleibt oder zunimmt. Wiederum wird die Kapsel dadurch deformiert und deren Hülle bricht auf.

Die Kompressionskraft ist dabei vorzugsweise wie vorgängig beschrieben, ausgelegt.

Die Getränkesubstanz der Kapsel kann in Form eines Presslings vorliegen. Entsprechend wird die Handhabung der Kapsel für den Anwender vereinfacht. Vorzugsweise sind die Mittel zum Aufbrechen der Hülle auch zum mindestens teilweisen Aufbrechen des Presslings ausgestaltet, so dass eine gleichmässige Extraktion der Getränkesubstanz vereinfacht wird.

Anhand von Figuren, welche lediglich Ausführungsbeispiele darstellen, wird die Erfindung im Folgenden näher erläutert. Es zeigen:
- Figur 1:: eine schematische Darstellung einer ersten Ausführungsform einer Brühkammer zum Durchführen des erfindungsgemässen Verfahrens,
- Figur 2:: eine schematische Darstellung einer weiteren Ausführungsform einer Brühkammer zum Durchführen des erfindungsgemässen Verfahrens,
- Figur 3:: die Brühkammer gemäss Figur 1, wobei das Aufbrechmittel unterschiedlich ausgestaltet ist,
- Figur 4:: die Brühkammer gemäss Figur 2, wobei das Aufbrechmittel unterschiedlich ausgestaltet ist,
- Figur 5:: eine schematische Darstellung der Zusammenwirkung von Aufbrechmittel und Kapsel zum Durchführen des erfindungsgemässen Verfahrens.

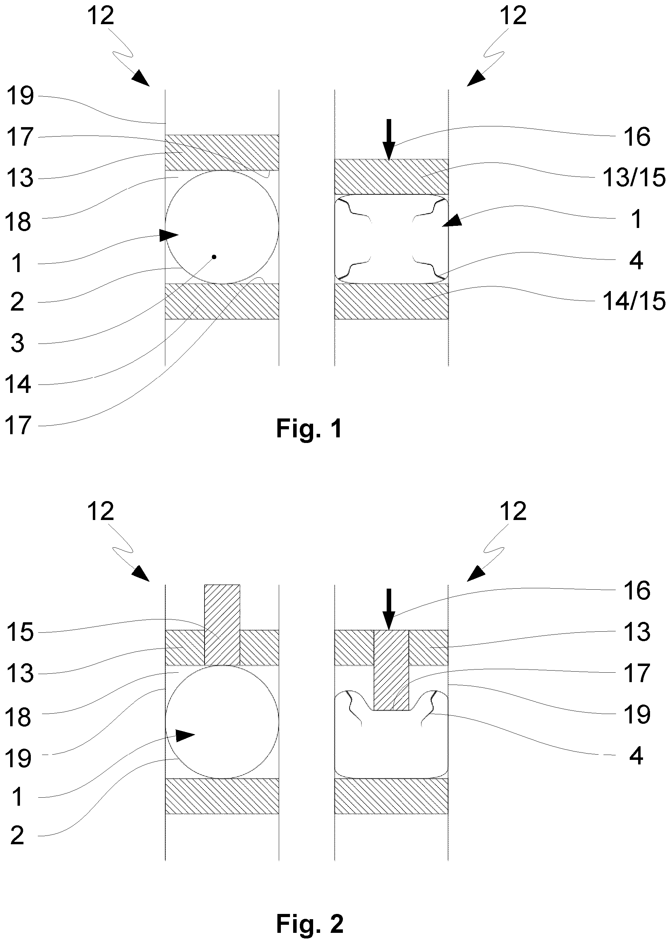

Figur 1 zeigt eine schematische Darstellung einer ersten Ausführungsform einer Brühkammer 12 einer Getränkezubereitungsmaschine zum Durchführen des erfindungsgemässen Verfahrens. Dabei ist auf der linken Seite die Brühkammer 12 direkt nach dem Einlegen einer Kapsel 1 und Verschliessen der Brühkammer 12 dargestellt. Die Kapsel 1 weist eine eine Getränkesubstanz 3 umschliessende Hülle 2 auf und ist kugelförmig ausgestaltet. Es versteht sich von selbst, dass die Kapsel 1 auch andere Formen aufweisen kann. Im Wesentlichen umfasst die Brühkammer 12 einen Hohlzylinder mit einer Seitenwand 19, in welchem eine erste Wand 13 und eine zweite Wand 14 relativ zueinander verschiebbar angeordnet sind. Durch die Relativverschiebung der beiden Wände 13, 14 zueinander kann ein Volumen 18 der Brühkammer 12 verringert werden. Eine Kompressionskraft 16 wirkt auf die Kapsel 1 ein und deformiert diese.

Auf der rechten Seite der Figur 1 wirkt bereits die Kompressionskraft 16 auf die Kapsel 1 ein. Erfindungsgemäss wird die Hülle 2 der Kapsel 1 in der Brühkammer aufgebrochen, so dass bei einem anschliessenden Durchströmen der Brühkammer 12 mit einem Extraktionsfluid ein Getränk aus der Getränkesubstanz 3 hergestellt werden kann. Die Hülle 2 bricht im dargestellten Ausführungsbeispiel auf, da sich die beiden Wände 13, 14 der Brühkammer aufeinander zu bewegen und eine Kompressionskraft 16 auf die Kapsel 1 einwirkt. Die Kapsel 1 wird deformiert und die Hülle 2 bricht auf. Das Aufbrechen erfolgt jedoch nicht an einer definierten Stelle, sondern wird sich abhängig von der Deformation und der Beschaffenheit der Kapsel an einer oder mehreren nicht definierten Stelle ausbilden. Es bilden sich Risse 4 in der Hülle 2 aus, welche einen Fluidzugang zur Getränkesubstanz 3 bilden. Die Risse 4 oder Brüche der Hülle 2 entstehen nicht an einem vorbestimmten Ort der Hülle 2. Ausserdem sind die Risse 4 nicht durch ein Aufstechmittel oder durch eine Schwachstelle in der Hülle initiiert. Die erste und zweite Wand 13, 14 der Brühkammer 12 stellen in dieser Ausführungsform das Aufbrechmittel 15 mit der entsprechenden Anpressfläche 17 dar.

In Figur 2 ist eine schematische Darstellung einer weiteren Ausführungsform einer Brühkammer 12 zum Durchführen des erfindungsgemässen Verfahrens dargestellt. Wiederum zeigt die linke Seite der Figur die Brühkammer 12 mit Seitenwand 19, oberer Wand 13 und unterer Wand 14 nach dem Einlegen der Kapsel 1 und Verschliessen der Brühkammer 12. Auf der rechten Seite wirkt ein Aufbrechmittel 15 mit einer Kompressionskraft 16 auf die Kapsel 1. Im Unterschied zur Figur 1, weist eine erste Wand 13 der Brühkammer 12 das Aufbrechmittel 15 auf, welches sich relativ zur ersten Wand 13 bewegen kann und in das Volumen 18 der Brühkammer 12 einfahren kann. Das Aufbrechmittel 15 wirkt mit einer Kompressionskraft 16 auf die Kapsel 1. Das Volumen 18 der Brühkammer 12 wird dadurch reduziert, die Kapsel 1 deformiert, so dass die Hülle 2 der Kapsel 1 aufbricht. Es sind wiederum Risse 4 ersichtlich, welche Fluidzugänge zur Getränkesubstanz bilden. Diese Risse 4 bilden sich wiederum im Bereich der stärksten Deformation der Hülle 2. Zwar sind die Risse 4 im oberen Bereich der Kapsel 1 zwischen Aufbrechmittel 15 und Seitenwand 19 der Brühkammer 12 dargestellt. Es versteht sich aber von selbst, dass abhängig von der Ausgestaltung der Brühkammer 12 und des Aufbrechmittels 15 die Risse 4 auch andernorts, beispielsweise im unteren Bereich der Kapsel 1, auftreten können. So hat beispielsweise die Dimension und die Ausgestaltung einer Anpressfläche 17 des Aufbrechmittels 15 einen Einfluss auf Art und Weise der Deformation der Kapsel 1 und die Ausbildung der Risse 4. Das Aufbrechen erfolgt nicht an einer definierten Stelle, sondern wird sich abhängig von der Deformation und der Beschaffenheit der Kapsel an einer oder mehreren nicht definierten Stelle ausbilden.

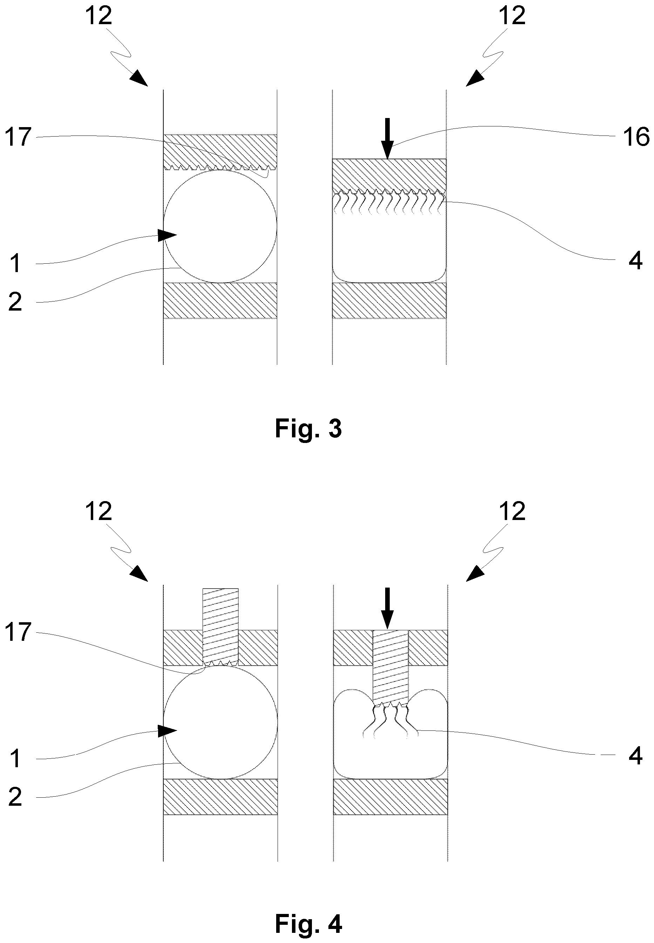

Die Figuren 3 und 4 zeigen wiederum die Brühkammern 12 gemäss den Figuren 1 und 2, wobei die Anpressfläche 17 des Aufbrechmittels 15 eine leichte Strukturierung aufweist. Diese Strukturierung ist jedoch von untergeordneter Natur und dient nicht dem Aufstechen der Hülle 2 der Kapsel 1. Vielmehr wird an dieser Strukturierung bei Anlegen einer Kompressionskraft 16 auf die Kapsel 1 eine Vielzahl von lokalen Deformationen erzeugt, welche das Aufbrechen der Hülle 2 begünstigen. Die Risse 4 werden entsprechend im Bereich dieser Strukturierung vermehrt auftreten. Selbstverständlich sind aber auch Risse 4 an anderer Stelle, beispielsweise wie in den Figuren 1 und 2 beschrieben, möglich. Die Risse 4 bilden wiederum einen Fluidzugang zur Getränkesubstanz. Das Aufbrechen erfolgt auch in dieser Situation nicht an einer definierten Stelle, sondern wird sich abhängig von der Deformation und der Beschaffenheit der Kapsel an einer oder mehreren nicht definierten Stelle ausbilden.

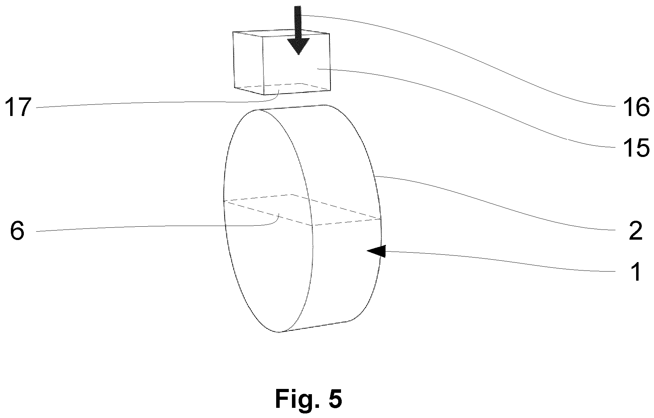

In Figur 5 ist eine schematische Darstellung der Zusammenwirkung von Aufbrechmittel 15 und Kapsel 1 zum Durchführen des erfindungsgemässen Verfahrens gezeigt. Die Kapsel 1 ist zylinderförmig ausgestaltet, kann aber jede andere Form aufweisen. Beispielsweise kann die Kapsel 1, wie in den Figuren 1 bis 4 dargestellt, kugelförmig sein. Es ist aber auch denkbar, dass die Kapsel die Form eines Quaders, insbesondere eines Würfels aufweist. Um die Hülle 2 der Kapsel 1 aufbrechen zur können, wird eine Aufbrechmittel 15 mit einer Kompressionskraft 16 beaufschlagt und wirkt auf die Kapsel 1 ein. Die Kapsel 1 wird dadurch deformiert, so dass die Hülle 2 aufbricht und sich Risse in der Hülle 2 ausbilden, so dass ein Fluidzugang zur Getränkesubstanz entsteht. Das Aufbrechmittel 15 kann eine beliebige Form aufweisen. Um ein Aufschneiden oder Durchstechen der Hülle 2 zu verhindern, weist das Aufbrechmittel 15 im Bereich seiner Anpressfläche 17 keine scharfen Konturen auf. Das Aufbrechverhalten der Kapsel 1 kann durch das Verhältnis der Anpressfläche 17 zu einer Querschnittsfläche 6 der Kapsel 1 in einer Ebene quer zur Richtung der Kompressionskraft 16 beeinflusst werden.

## Patentansprüche

1. Verfahren zur Zubereitung eines Getränks aus einer Kapsel (1), wobei die Kapsel (1) eine Getränkesubstanz (3) und eine die Getränkesubstanz (3) umschliessende Hülle (2) aufweist, umfassend die Schritte:
- Einbringen der Kapsel (1) in eine Brühkammer (12) einer Getränkezubereitungsmaschine,
- Aufbrechen der Hülle (2) der Kapsel (1) zum Erzeugen eines oder mehrerer Fluidzugänge,
- Durchströmen der Brühkammer (12) mit einem Extraktionsfluid.

2. Verfahren nach Anspruch 1, wobei beim Durchströmen der Brühkammer (12) die aufgebrochene Hülle (2) in der Brühkammer (12) verbleibt.

3. Verfahren nach Anspruch 1 oder 2, wobei zum Aufbrechen der Hülle (2) ein Volumen (18) der Brühkammer (12) reduziert wird und/oder ein Aufbrechmittel (15) in die Brühkammer (12) eindringt.

4. Verfahren nach einem der vorhergehenden Ansprüche, wobei zum Aufbrechen der Hülle (2) eine Kompressionskraft (16) auf die Kapsel (1) einwirkt, wobei insbesondere die Kompressionskraft (16) wenigstens 10 N, bevorzugt wenigstens 50 N, besonders bevorzugt wenigstens 100 N, beträgt.

5. Verfahren nach einem der vorhergehenden Ansprüche, wobei beim Aufbrechen der Hülle (2) die Hülle (2) an wenigstens einer Stelle, vorzugsweise an einer Vielzahl von Stellen, insbesondere an einer oder mehreren nicht definierten Stellen, aufbricht.

6. Verfahren nach einem der vorhergehenden Ansprüche, wobei die Getränkesubstanz (3) in Form eines Presslings vorliegt und vorzugsweise beim Aufbrechen der Hülle (2) auch der Pressling der Getränkesubstanz (3) zumindest teilweise aufgebrochen wird.

7. Verfahren nach Anspruch 6, wobei eine Dichte der Getränkesubstanz (3) beim Aufbrechen des Presslings reduziert wird, vorzugsweise um wenigstens 10%, besonders bevorzugt um wenigstens 15%, ganz besonders bevorzugt um wenigstens 20%, gegenüber der Dichte der Getränkesubstanz bei intaktem Pressling.

8. Verfahren nach einem der vorhergehenden Ansprüche, wobei die Hülle (2) aromadicht und sauerstoffundurchlässig ausgebildet ist und/oder die Kapsel (1) biologisch abbaubar und/oder heimkompostierbar ist.

9. Verwendung einer Getränkezubereitungsmaschine zur Zubereitung eines Getränks aus einer Kapsel (1), insbesondere in einem Verfahren nach einem der vorhergehenden Ansprüche, wobei die Getränkezubereitungsmaschine eine Brühkammer (12) zur Aufnahme und Extraktion der Kapsel (1) und ein Mittel zum Aufbringen einer Kompressionskraft (16) auf die Kapsel (1) aufweist, wobei die Kapsel (1) eine Getränkesubstanz (3) und eine die Getränkesubstanz (3) umschliessende Hülle (2) aufweist, wobei die Hülle (2) derart ausgebildet ist, dass diese bei Beaufschlagung mit der Kompressionskraft (16) aufbricht.

10. Verwendung einer Kapsel (1) zur Zubereitung eines Getränks in einer Getränkezubereitungsmaschine, insbesondere in einem Verfahren nach einem der Ansprüche 1 bis 8, wobei die Getränkezubereitungsmaschine eine Brühkammer (12) zur Aufnahme und Extraktion der Kapsel (1) umfasst, wobei die Kapsel (1) eine Getränkesubstanz (3) und eine die Getränkesubstanz (3) umschliessende Hülle (2) aufweist, wobei die Hülle (2) derart ausgebildet ist, dass diese bei Beaufschlagung mit einer Kompressionskraft (16), vorzugsweise durch die Getränkezubereitungsmaschine, aufbricht.

11. Verwendung nach Anspruch 9 oder 10, wobei die Hülle (2) aromadicht und sauerstoffundurchlässig ausgebildet ist und/oder die Kapsel (1) biologisch abbaubar und/oder heimkompostierbar ist.

12. Verwendung nach einem der Ansprüche 9 bis 11, wobei die Getränkesubstanz (3) in Form eines Presslings vorliegt.

13. System zur Zubereitung eines Getränks, insbesondere gemäss einem Verfahren nach einem der Ansprüche 1 bis 8, umfassend eine Kapsel (1) und eine Brühkammer (12), wobei die Brühkammer (12) ein Volumen (18) zur Aufnahme der Kapsel (1) aufweist, wobei die Kapsel (1) eine Getränkesubstanz (3) und eine die Getränkesubstanz (3) umschliessende Hülle (2) aufweist, wobei die Brühkammer (12) Mittel (15) zum Aufbrechen der Hülle (2) der Kapsel (1) aufweist, wobei die Hülle (2) derart ausgebildet ist, dass diese bei Beaufschlagung mit einer Kompressionskraft (16) aufbricht.

14. System nach Anspruch 13, wobei die Mittel (15) zum Aufbrechen der Hülle (2) mit einer Kompressionskraft (16) das Volumen (18) der Brühkammer (12) reduzieren und/oder in das Volumen (18) der Brühkammer (12) eindringen, wobei vorzugsweise die Kompressionskraft (16) wenigstens 10 N, bevorzugt wenigstens 50 N, besonders bevorzugt wenigstens 100 N, beträgt.

15. System nach einem der Ansprüche 13 bis 14, wobei die Getränkesubstanz (3) der Kapsel (1) in Form eines Presslings vorliegt und vorzugsweise die Mittel (15) zum Aufbrechen der Hülle (2) auch zum mindestens teilweisen Aufbrechen des Presslings ausgestaltet sind.
